# EUROPEAN PATENT SPECIFICATION

(11) **EP 1 314 078 B1**
(45) Date of publication and mention of the grant of the patent: **13.02.2013**
(21) Application number: 01961041.9
(22) Date of filing: 24.07.2001
(51) Int. Cl.: H04L 29/06, H04L 29/08, H04L 29/12, G06Q 30/06, G06Q 20/12, G06Q 20/04, G06Q 20/16

(54) **AUTOMATIC NETWORK USER IDENTIFICATION**
AUTOMATISCHE NETZWERKBENUTZERIDENTIFIKATION
IDENTIFICATION AUTOMATIQUE D'UN UTILISATEUR DE RESEAU

(30) Priority: 25.07.2000 US 220513 P; 25.07.2000 US 220815 P; 31.01.2001 US 772950
(43) Date of publication of application: 28.05.2003
(73) Proprietor: Trivnet Ltd., 60990 Shefayim (IL)
(72) Inventor: WILF, Saar, 69631 Tel Aviv (IL); SHAKED, Shvat, 92630 Jerusalem (IL); TAL, Or, 56516 Savyon (IL); TARSI, Yuval, 44229 Kfar Saba (IL)
(74) Representative: Tomkinson, Alexandra
(86) International application number: PCT/IL2001/000680
(87) International publication number: WO 2002/008853

(56) References cited:
- WO-A-98/00951
- US-A- 5 845 073
- US-A- 5 845 267
- US-A- 5 864 610
- US-A- 5 905 736
- US-A- 5 923 756
- US-A- 6 052 785
- US-A- 6 061 650
- US-B1- 6 219 790
- US-B1- 6 256 739

## Description

### FIELD OF THE INVENTION

The present invention relates to a method and system for automatically identifying users on a network.

### BACKGROUND OF THE INVENTION

Many services require real-world information about a user. Acquiring real-world information about a user is herein defined as "user identification". Such information includes, for example, first name, last name, full home address, telephone numbers for home and work, fax and mobile, and credit card information. This is true whether the service is obtained in person or over a network.

One type of service requiring user identification is a credit card purchase. In order to complete a purchase, the user must provide credit card information that will enable a retailer to process a credit card transaction. In some cases, service providers enhance their services by using user identification information. For example, a chain-store delivery service can use a user's zip code to direct an order to the closest branch.

The Internet is one type of a network and it is used extensively today for providing a wide array of services and communications. It is, however, an anonymous medium, as it does not require its participants to identify themselves. The Internet provides many services that do not require such identification. For example, in a standard HTTP Internet session a user may access a server and view information without the server being notified of the identity of the user. In another example, users may participate in a "chat" session in which they exchange text messages without identifying themselves.

While the anonymous nature of the Internet is convenient for most users in most situations, it presents a significant barrier in services involving private or confidential information, financial applications, or any other service vulnerable to fraud or abuse. Similar problems are present in other networks, such as the cellular and mobile networks.

Many methods have been offered to solve this problem. In the case of the Internet, the user is sometimes issued a software or hardware identity token by a trusted authority. This token is then verified over the Internet using cryptographic methods such as the Rivest, Shamir, Adleman algorithm (RSA algorithm) (US patent 4405829 Cryptographic Communications System And Method). These methods are limited, in that a user wishing to obtain such a token must go through a cumbersome off-line identification process with the trusted authority. In many cases, there is also some installation requiring technical ability that is necessary before the system can be used. An example is a smart card, which is a physical package that stores the user id infernally in such a manner that it cannot be changed.

Due to such problems, service providers on a network often ask users to voluntarily provide their identification information. For example, when purchasing items over a network, a user will usually manually provide his credit card account number, for example, by filling in an HTML form or by entering data on his cellular or mobile phone. This identification method is insecure, since by obtaining the credit card number any person can impersonate the original cardholder.

There are a number of issues that arise when a user manually provides such identification information. These include data entry errors, purposeful entry of fraudulent information, and reluctance on the part of users to provide this information over a network. The user's reluctance may be caused by lack of trust in the service provider if, for example, it is an unfamiliar service provider. It may also be caused by privacy concerns on the part of the user that his personal information may be accessed improperly. The current rates of Internet credit card fraud are an indication of current Internet commerce problems.

In US patent No. 5,845,267 there is described a system and method for billing for transactions conducted over the Internet from within an intranet.

In US patent No. 5,864,610 there is described an interactive and information data services telephone billing system.

### SUMMARY OF THE INVENTION

According to claim 1 of the present invention, there is provided a method for automatically acquiring the identity of a user requesting service from a service provider, said method comprising: accessing a network by said user through a network access provider (NAP) that includes an access system to control access of the user to the network; engaging in a communication session with a service provider that is connected to the network, to request the service provider to provide a service to the user, initiating a request by said service provider to said NAP to identify said user from the user's network address; wherein said method is characterized by:
Identifying the NAP to which to send the request by routing the request via an identification switch that determines which NAP from a plurality of NAPs is servicing the user, said NAP comprising an identification module to resolve the requests by said service provider; wherein responsive to the request, retrieving user identification information associated with the user's network address; and sending a response with the user identification information to said service provider. Claim 19 provides a corresponding system.

According to an embodiment of the invention, there is provided a method for automatically acquiring the identity of a user requesting service from a service provider. The method includes the service provider sending an identification request to a network access provider (NAP), the NAP including a NAP identification module and an access system in communication with the NAP identification module and the NAP ID module extracting information associated with the user, verifying the network address of the user and forwarding the information associated with the user to the service provider.

Furthermore, according to an embodiment of the invention, the step of extracting information includes the steps of verifying whether the network address of the user is included in the ID request and if the network address of the user is not included, extracting the network address when the user connects to the NAP.

Furthermore according to an embodiment of the invention, the step of extracting information includes the step of retrieving data from a group of databases including an online session database in communication with the NAP and a user information database in communication with the NAP.

Furthermore, according to an embodiment of the invention, the step of extracting the network address includes the steps of detecting a request from the user of a specific URL, the specific URL being identifiable by a plug-in installed in the proxy server of the NAP and the plug-in reporting the real network address of the user.

Furthermore, according to an embodiment of the invention, the step of extracting the network address includes the steps of detecting a request from the user of a specific URL, the specific URL being identifiable by a network sniffer installed between the user and the proxy server of the NAP; and the sniffer reporting the real network address of the user.

Furthermore, according to an embodiment of the invention, the step of extracting the network address includes at least one of the steps of:
instructing the user to connect to the address extraction module of the NAP via an alternative service or port not associated with the proxy server;
opening a direct connection to the address extraction module; and
by automatically configuring the proxy settings.

Furthermore, according to an embodiment of the invention, the step of forwarding includes the step of reporting the information associated with the user to the service provider. Alternatively, step of forwarding includes the step of verifying information items provided in the identification request; and forwarding a match score describing the similarity between the information associated with the user and the information items provided in the identification request.

Alternatively, according to an embodiment of the invention, the step of forwarding includes the step of sending a virtual ID for the user to the service provider or sending information associated with the user in a previous request to the service provider.

Additionally, according to an embodiment of the invention, the method further includes the steps of:
determining the identity of the NAP servicing the user;
forwarding the identification request to the NAP identification module;
determining whether the identification request includes the network address of the user; and
if the identification request does not include the network address of the user, extracting the network address when the user connects to the NAP.

Furthermore, according to an embodiment of the invention, the step of determining the identity of the NAP includes maintaining a look-up table of network addresses associated with a plurality of NAPs and determining the identity of the NAP by reference to the look-up table.

Furthermore, according to an embodiment of the invention, the look-up table is updated manually whenever network address assignments change. Alternatively, the look-up table is updated automatically from the NAP identification module based on information reported from the access system. The look-up table may be constructed from existing network address assignment databases.

Additionally there is provided in accordance with an embodiment of the invention, a method for automatically identifying an user requesting service from a service provider. The method includes:
the service provider determining the veracity of the network address reported by the user;
if the network address is determined to be trusted,
the service provider including the network address in an identification request and sending the identification request to a network access provider (NAP), the NAP includes a NAP identification module; and
providing service in accordance with the service request; or
if the network address is determined not to be trusted
the service provider sending an identification request to a network access provider (NAP) for verifying the network address of the user; and
forwarding the information associated with the user to the service provider.

Furthermore, according to an embodiment of the invention, the method further includes the steps of:
determining the identity of the NAP servicing the user;
forwarding the identification request to the NAP identification module associated with the identified NAP;
determining whether the identification request includes the network address of the user; and
if the identification request does not include the network address of the user, extracting the network address when the user connects to the NAP.

Furthermore, according to an embodiment of the invention, the step of forwarding includes the steps of:
configuring at least one network appliance to route specific requests to a specified NAP; and
the NAP identification module associated with the specified NAP identifying the user.

Furthermore, according to an embodiment of the invention, the network appliance includes one of a group including an HTTP proxy and a WAP Gateway.

Additionally, there is also provided, according to an embodiment of the invention, a system for acquiring the identify of the user of an anonymous network. The system includes a service provider in communication with the user, at least one network access provider (NAP) in communication with the service provider and the user and an access system in communication with the address extractor. The NAP includes a NAP identification module which includes a controller and an address extractor in communication with the controller.

Furthermore, according to an embodiment of the invention, the system further includes at least one online session database in communication with the controller and the access system. The online session database contains information associating the user with the user's network address.

Additionally, according to an embodiment of the invention, the system further includes at least one user information database, in communication with the controller. The user information database includes databases containing data including personal details related to the user, billing information, information about past user logins, and a reverse telephone directory.

### BRIEF DESCRIPTION OF THE DRAWINGS

The present invention will be understood and appreciated more fully from the following detailed description taken in conjunction with the appended drawings in which:
Fig. 1 is a schematic block diagram illustration of an environment for the operation of an automatic identification system for network users, constructed and operative in accordance with an embodiment of the present invention;
Fig. 2 is a schematic block diagram illustration of the components of a network access provider (NAP) of Fig. 1 in an automatic identification system, constructed and operative in accordance with an embodiment of the present invention;
Figs. 3A and 3B are communication flow diagrams of an automatic identification system constructed and operative in accordance with an embodiment of the present invention;
Fig. 4 is a schematic flowchart illustrating the steps of the automatic identification method performed by an NAP of Fig. 1 in accordance with an embodiment of the present invention when a user connects or disconnects from the network;
Fig. 5 is a schematic flowchart illustrating the steps of the automatic identification method performed in accordance with an embodiment of the present invention by an NAP of Fig. 1 when receiving an identification request;
Fig. 6 is a schematic flowchart illustrating the steps of the automatic identification method performed by a service provider of Fig. 1 in accordance with an embodiment of the present invention; and
Fig. 7 is a schematic flowchart illustrating the steps of the automatic identification method performed by the identification switch of Fig. 1 in accordance with an embodiment of the present invention.

### DETAILED DESCRIPTION OF THE INVENTION

Applicants have developed an automatic identification system for identifying network users. This system enables service providers to use real world identity information about users that is available to the entity that provides network access to the user (hereinbelow referred to as the network access provider (NAP)), thus leveraging the trust between the user and the NAP. The NAP may make use of user information it has collected from its regular business interaction with the user. This system allows the NAP to provide the user identification automatically. The system relies on cooperation with the NAP, because the NAP operates at the point at which the user accesses the network, the point at which the most accurate user identification information is available. Among the benefits of this cooperation is use of information available to the NAP as well as information regarding the unique characteristics of the user's connection at a place where the connection is generally secure.

The automatic identification system of the present invention should accurately extract the real network address of the user and associate this address with user identification information. Applicants have further realized that if there is more than one NAP operating, then an identification switch unit is necessary in order to identify the correct NAP from among the plurality of NAPs.

In an embodiment of the present invention, the automatic identification system may be used, for example, for identifying Internet users. In this case, the request may be made to the Internet service provider (ISP) of the user. The network address of the user may be the Internet Protocol address (IP address) of the user.

In another embodiment of the present invention, the automatic identification system may be used for identifying users on a telephone, mobile or cellular data network. In this case, the network address of the user may be the telephone number of the user.

Other embodiments are possible, including the use of the automatic identification system in the PSTN (Public Switch(ed) Telephone Network) and on the Internet wherein a user's network address may be an IPv6 address.

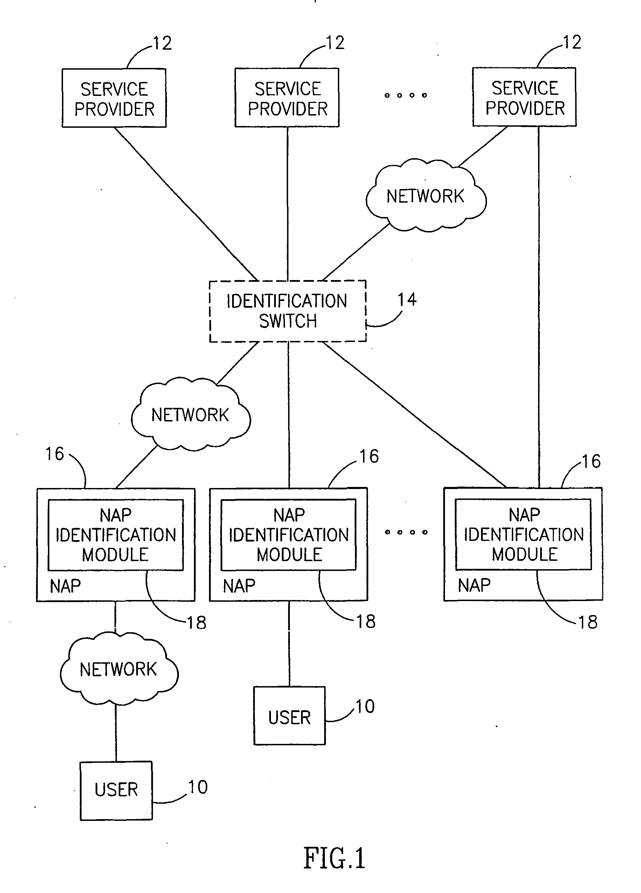

Reference is now made to Fig. 1, a schematic block diagram of the environment in which an automatic identification system, constructed and operative in accordance with an embodiment of the present invention, operates. The environment includes at least one service provider 12, an optional identification switch 14, and at least one NAP 16 comprising an NAP identification module 18, and at least one user 10. In the case of a plurality of NAPs 16, identification switch 14 is necessary to determine the correct NAP 16 from which the desired user information may be requested.

As can be seen in Fig. 1, the connections between these components may be over dedicated communication lines or across networks, for example, over the Internet, over mobile connections, or any other appropriate communications network. Additionally, these connections may be protected by standard encryption methods.

User 10 connects to a network using NAP 16 and requests a service from service provider 12. This service may require that user 10 be identified during the service process, for example, if user 10 wishes to buy a product from service provider 12. If user identification is necessary, a request is made by service provider 12 either to optional identification switch 14 (for example if there are a plurality of NAPs 16 present) or directly to NAP 16 (as described hereinbelow).

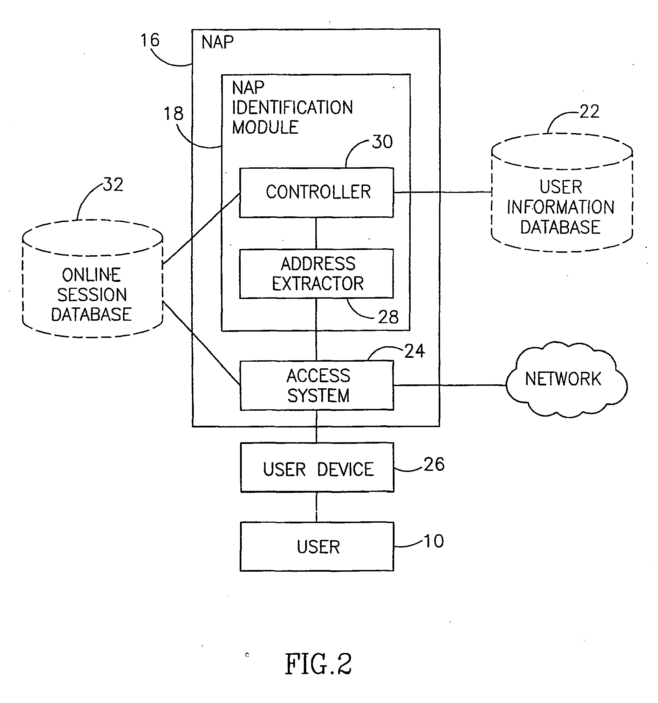

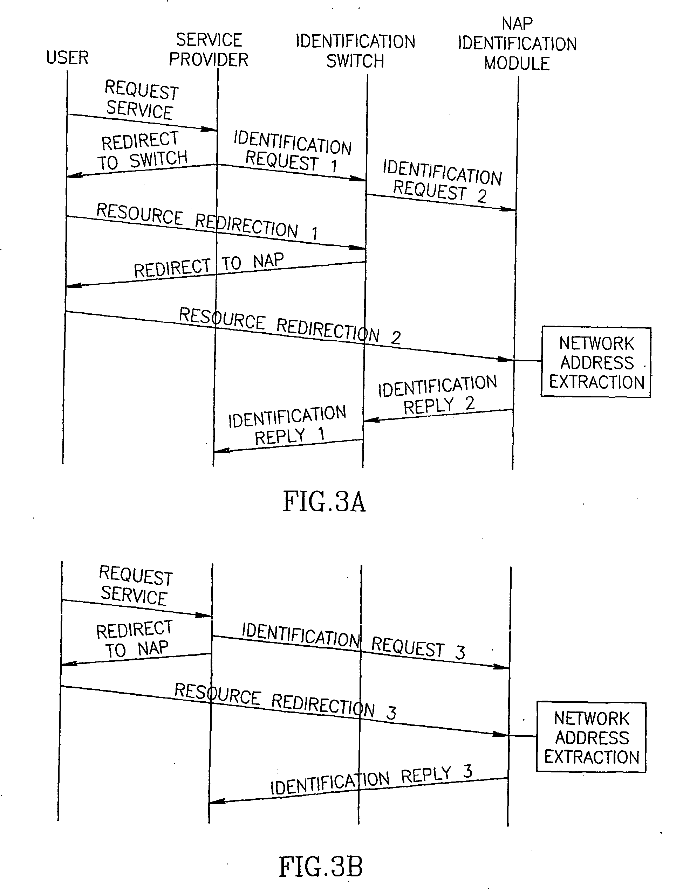

NAP identification module 18 resides on the network of NAP 16 and interfaces with several components of NAP 16 and other members of the environment of the identification system. These interactions may be necessary in order to enable the automatic user identification. The identification is performed by a series of steps in which the user's identifiers and identification information are iteratively refined until the user's real world information is obtained, as is described hereinbelow with respect to Figs. 2 and 3. NAP identification module 18 may be a hardware or software component or a combination thereof.

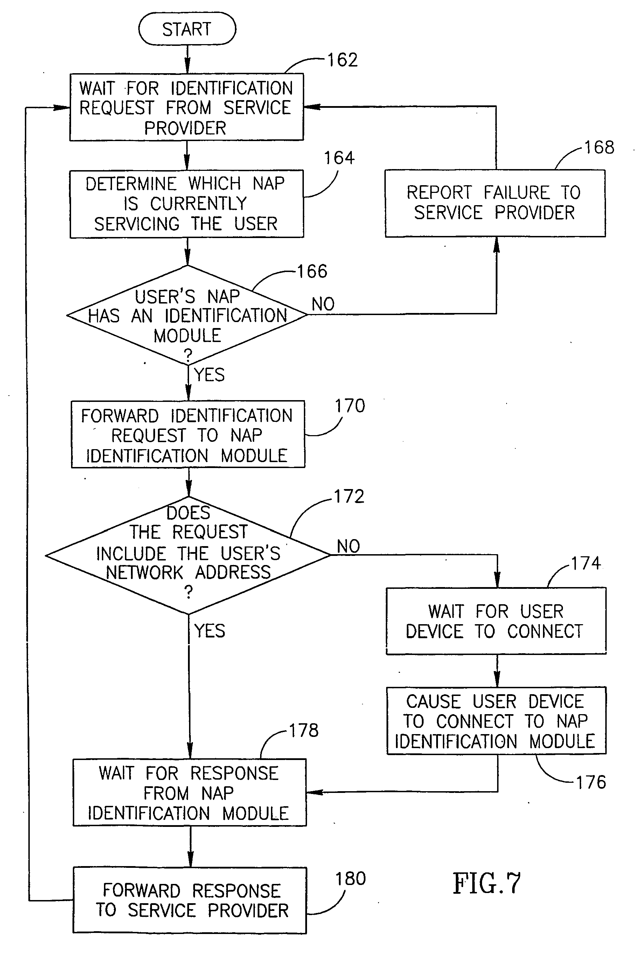

Identification switch 14 is optional, and its inclusion is only one embodiment of a system to interface between service provider 12 and NAP 16. Identification switch 14 is responsible for routing identification requests from a service provider 12 to the NAP identification module 18 that may be able to handle them. Identification switch 14 may be necessary, since service provider 12 may not have a direct relationship with every NAP 16, and might not "know" the NAP 16 that provides service to user 10. Identification switch 14 determines which NAP 16 services user 10 without performing a full identification of user 10. The operation of identification switch 14 and the methods used to correctly identify the correct NAP 16 are described hereinbelow with respect to Figs. 3 and 7. It is noted that if there are many service providers 12, but only one NAP 16 which service providers 12 all recognize, an interface is not necessary.

It is noted that although one identification switch 14 is shown in Fig. 1, the system may operate with several identification switches 14 located at possibly different geographical locations.

Reference is now made to Fig. 2, a schematic block diagram of the components of NAP 16 participating in the automatic identification process. NAP 16 comprises NAP identification module 18 and an access system 24. NAP identification module 18 comprises an address extraction component 28 and a controller 30, constructed and operative in accordance with an embodiment of the present invention. Controller 30 interfaces with an optional user information database 22 and an optional online session database 32, which may be any available online session database 32. This includes a proprietary component of NAP 16 or a component of NAP identification module 18. When network addresses are allocated permanently, as in a phone system for example, online session database 32 is not necessary. Alternatively, in these cases online session database 32 may be considered a trivial one-to-one database, wherein each network address resolves to itself. User information database 22 comprises at least one database of user information, examples of which will be given hereinbelow. Address extraction component 28 communicates with controller 30 and access system 24. Access system 24 further communicates with online session database 32, a user device 26, and a network.

Access system 24 is usually connected to the network through a dedicated data line. When the network is the Internet, a mobile network, or a cellular network, access system 24 usually includes components such as access servers (also called remote access servers or network access servers), routers, and AAA (authentication, accounting, and authorization) servers.

User 10 wishing to access the network connects to access system 24 using user device 26. User device 26 is any device suited for accessing the network, such as a personal computer with a modem, a network-enabled cellular or mobile phone, an Interactive TV connected to a cable modem over the CATV infrastructure, or any other appropriate network-capable device. User device 26 may be connected through any appropriate medium, such as an analog modem over PSTN lines, ISDN (Integrated Services Digital Network) lines, DSL (Digital Subscriber Line) lines, a cable modem over the CATV (Cable Television) infrastructure, cellular data network, mobile network, etc. User device 26 may even be a regular telephone connected using the PSTN.

In an embodiment of the present invention in which the network is the Internet, an exemplary user device 26 might be an Internet enabled cellular or mobile telephone.

In other embodiments user device 26 might access any service on a network using general packet radio services (GPRS) and short message service (SMS). Appropriate cellular networks for these services would include GSM (Global System for Mobile Communication), CDMA (Code Division Multiple Access), and TDMA (Time Division Multiple Access) networks among others, as well as PCS (Personal Communications Service) systems.

NAP 16, as mentioned hereinabove, has access to user information database 22. User Information database 22 is a database external to the invention and may be any known data collection or database system known in the art. It may provide enhanced user information, for example, personal details related to a given user ID, billing information, technical details, information about past logins, or customer care cases. In addition, the system may also have access to a user information database 22 known as a reverse telephone directory. A reverse telephone directory may associate a given telephone number with information about its owner and its location. User information database 22 may be used in identifying user 10.

NAP identification module 18, constructed and operative in accordance with an embodiment of the present invention, is installed on the network of NAP 16 and automatically identifies network users 10. This identification is an iterative process, which involves refining the user identification information under management of controller 30. Address extraction unit 28 finds the real network address of user 10. This process is described in further detail hereinbelow. Online session database 32 monitors events in access system 24 and is notified in real time when user 10 connects and disconnects from the network. Controller 30 interfaces with online session database 32. Online session database 32 holds real-time information about all users 10 currently connected to NAP 16, the network addresses they are using, and any other session information reported by access system 24. This process is described in further detail hereinbelow. In an embodiment of the present invention, NAP identification module 18 notifies service provider 12 in real time about user connections and disconnections.

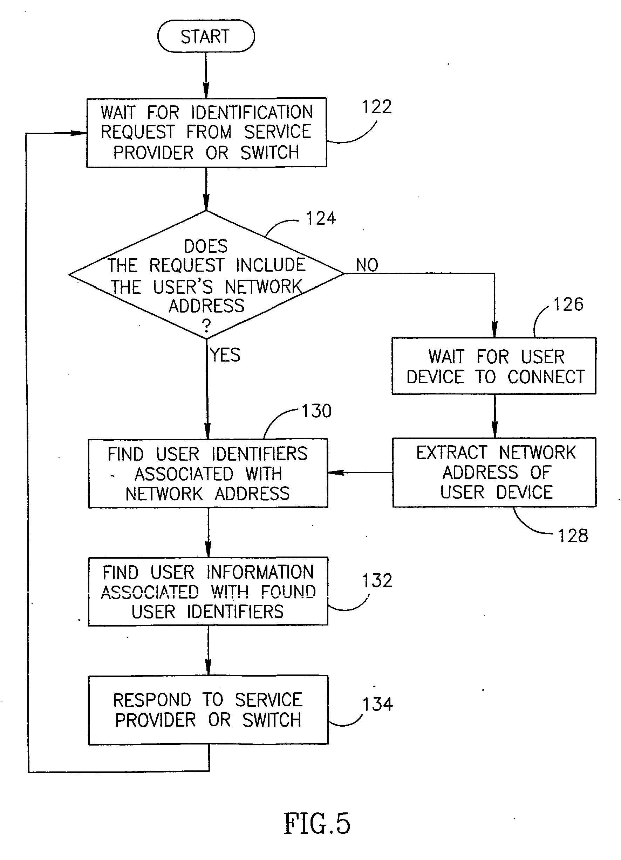

Reference is now made to Figs. 3A and 3B, communication flow diagrams of two exemplary service requests. It provides an overview of the order of requests and responses between user 10, service provider 12, identification switch 14, and NAP identification module 18. The steps involved in executing these communications are shown hereinbelow with respect to Figs. 5 - 7.

It is noted that address extraction module 28 may be placed outside NAP identification module 18, for example, in an embodiment of the present invention address extraction module 28 is placed in identification switch 14.

One cycle of the process is shown in Fig. 3A, wherein the cycle begins with a request by user 10 for a service from service provider 12. Upon receipt of the request, service provider 12 sends an identification request1 to identification switch 14. Service provider 12 either extracts the user's network address or sends a response to user 10 in the form of a resource redirection1 from user 10 to identification switch 14.

After determining the correct NAP identification module 18 to contact, identification switch 14 sends identification request2. Identification request2 is generally the same request as identification request1, now directed to NAP identification module 18. While the identification requests are being processed, resource redirection1 is received by identification switch 14. Identification switch 14 sends a response to user 10 with a further redirection to the correct NAP 16. This is the NAP 16 comprising NAP identification module 18 to which identification switch 14 has sent identification request2. Resource redirection2 is sent from user device 26 to NAP identification module 18.

When resource redirection2 is received by NAP identification module 18, network address extraction is performed as described hereinbelow with respect to Fig. 5. NAP identification module 18 replies to identification request2 by sending identification reply2 to identification switch 14. Identification reply2 contains the requested user identification result. In turn, identification switch 14 responds to identification request1 by sending identification reply1 to service provider 12. Identification reply1 contains the requested user identification result received by identification switch 14 from NAP Identification module 18.

Alternatively, as shown in Fig. 3B, upon receipt of a service request, service provider 12 sends identification request3 directly to NAP identification module 18 (i.e. identification switch 14 is not used). As above, service provider 12 either extracts the user's network address or sends a response to user 10 in the form of a resource redirection3 from user 10 to NAP identification module 18. When resource redirection3 is received by NAP identification module 18, network address extraction is performed. When the identification request processing is complete, NAP identification module 18 replies to identification request3 by sending identification reply3 (containing the requested user identification result) directly to service provider 12.

It is noted that these are only two exemplary cycles. Other combinations wherein identification switch 14 is used only for resource redirection or only for identification request and reply are also possible.

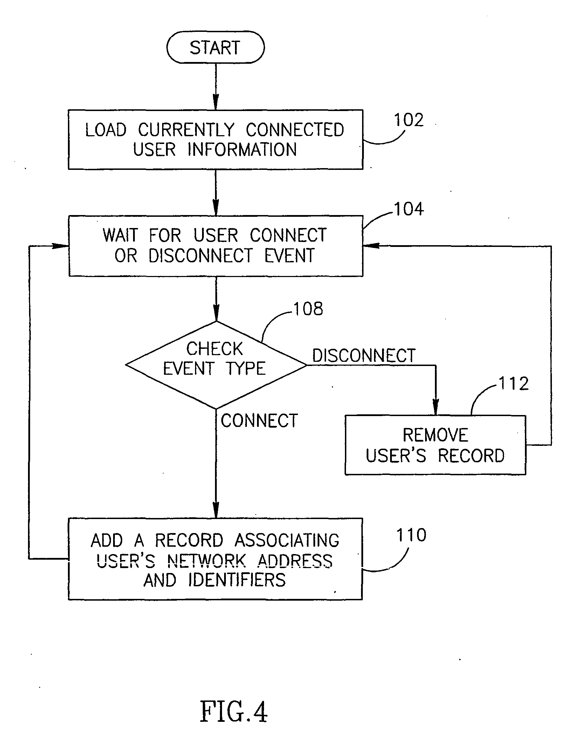

The operation of NAP identification module 18 may be divided into two parts, which are described in Fig. 4 and Fig. 5 hereinbelow. The first part relates to gathering information by online session database 32. The second part relates to address extraction by address extraction unit 28.

### Real-Time Monitoring

Fig. 4, to which reference is now made, is a schematic flowchart illustrating the steps of the automatic identification method performed by NAP 16 when user 10 connects or disconnects from the network. When the automatic identification system constructed and operative in accordance with an embodiment of the present invention begins operation, users 10 may already be connected to NAP 16. The identification system thus first needs to collect information about users 10 currently connected (step 102). These may be users who are permanently connected (e.g. using leased lines), or users who recently connected to NAP 16. Information about permanent users may be stored and updated manually by NAP 16, since the information seldom changes. Information about recent connections may be collected from the log files of access system 24 (Fig. 2) or by querying access system 24 directly.

Once the identification system is updated, access system 24 is monitored for new events (step 104). When a new event is reported, the automatic identification system checks whether the event is a connection or disconnection by user 10 (decision step 108). If user 10 is connecting, all relevant information about his session, including the network address and the identifiers of user 10, is added as a record to online session database 32 (step 110). The system then resumes the wait for further events (step 104). If user 10 is disconnecting, the system looks up his record in online session database 32 and removes it (step 112). The system then resumes the wait for further events (step 104).

Notification of connect and disconnect events may be issued, collected, and stored in online session database 32 and accessed by NAP identification module 18 through controller 30. There are several possible methods to obtain the events from access system 24.

In many network access systems 24, a dedicated authentication, accounting, and authorization (AAA) server is used to authenticate users 10 and handle accounting information. Access servers send authentication requests and accounting notifications to the AAA server. These AAA messages may report information such as the event type (connect, disconnect), the network address assigned to user 10, the authenticated username, the caller ID received on the phone line, and technical information such as the bit rate of the connection, communication protocol, etc. The most popular standard for AAA is called RADIUS (Remote Authentication Dial In User Service) and is described in detail in Request For Comments (RFC)s 2058, 2059, 2138, 2139, 2865, 2866, 2867 and 2868. Another well-known AAA standard is TACACS (Terminal Access Controller Access Control System) and is described in detail in RFC 1492.

In accordance with an embodiment of the present invention, online session database 32 is created by "sniffing" AAA messages in access system 24. A network sniffer is a device that intercepts all communications in the network segment on which it is installed. The sniffer (hardware, software or a combination thereof) is placed on the network segments between the access servers and the AAA server or directly on the access servers and detects and reports AAA messages.

In accordance with another embodiment of the present invention, online session database 32 is created by monitoring AAA server log files. AAA servers may generate log files of user logins and logouts, for example for accounting purposes. These logs may be read periodically and used to update online session database 32.

In accordance with yet another embodiment of the present invention, online session database 32 is integrated directly with the AAA server, the access server, or an existing online session database 32.

It should be noted that these methods are not mutually exclusive and may be invoked in parallel. For example, information may be obtained from a network sniffer and then verified against information kept by the access server.

### Address Extraction Methods

It is necessary to extract the true network address of user 10 as assigned to him by NAP 16 in order to correctly identify user 10. However, the network address shown may not be the true network address. In accordance with an embodiment of the present invention, the true network address may be found as described in Figs. 5, 6, and 7 hereinbelow.

Reference is now made to Fig. 5, a schematic flow chart illustrating the steps of the automatic identification method performed by NAP 16 when an identification request is made. The automatic identification system waits until an identification request is received either from switch 14 or directly from service provider 12 (step 122). When a request is received, the automatic identification system checks whether the network address of the user is included (decision step 124). If not, the automatic identification system waits for user device 26 to connect (step 126) if not already connected, and then extracts the network address of user device 26 (step 128), as described hereinbelow. Once the network address is obtained or if it was already reported in the request, the automatic identification system retrieves the user identifiers associated with that address from online session database 32 (step 130). Further information may then be retrieved from user information database 22 (Fig. 2) using the retrieved user identification (step 132). This information may include, for example, billing details associated by NAP 16 with a specific username. Finally, information regarding user 10 is returned to switch 14 or service provider 12 (step 134), and the automatic identification system resumes waiting for the next request (step 122).

At step 128, the system extracts the network address that user device 26 has been assigned. This step may be complex, as the network address may not always be easily and securely available. Two exemplary reasons are exposure of a different IP address and spoofing of an IP address.

Some network appliances manipulate the user connections and expose a different network address than the one originally assigned to user device 26. These appliances may include (a) proxy servers actively configured by the client to relay his connection; (b) proxy servers transparently placed by NAP 16 to relay the user connections; and (c) NAT (network address translation) devices that map internal network addresses to external network addresses. For simplicity, we will refer to any such device as a "proxy".

A malevolent attempt to spoof a network address is an attempt to assume the identity of another user. In this case, an attacker creates a connection that reports an incorrect source address (which may belong to another user).

### Proxies

In accordance with one embodiment of the present invention, the real network address of user 10 is obtained, when it is masked behind a proxy, by using a proxy plug-in. This plug-in is a special software module, constructed and operative in accordance with an embodiment of the present invention, installed on the proxy server of NAP 16. It detects requests, which are part of the automatic identification process, and reports the true network address of user 10 to controller 30 or to identification switch 14. One example of a request that is part of the automatic identification process is the transmission of a special URL that the plug-in detects. Redirection (as in Fig. 3) is used to cause user device 26 of user 10 to request the special URL from switch 14 or NAP identification module 18. Upon receipt of the user's request, the plug-in has access to the real network address of user 10. Additionally the report of the true network address may be signed and encrypted.

In accordance with another embodiment of the present invention, the real network address of user 10 is obtained, when it is masked behind a proxy, by using a network sniffer. The sniffer is installed at the segment between user 10 and the proxy, and when requests related to the automatic identification process (e.g. a special URL as described) are detected, the network address of user 10 is reported.

In accordance with yet another embodiment of the present invention, the real network address of user 10 is obtained, when it is masked behind a proxy, by trusting the report of the proxy. If a certain proxy is known to correctly report network addresses of users 10 within certain limitations, such as a specific network address range, the reported network address may be used as is.

In accordance with another embodiment of the present invention, the real network address of user 10 is obtained, when it is masked behind a proxy, by using alternative service connections. There exist cases in which only specific services or ports are allowed through by a proxy. Such configurations may have been set either by user 10 or by NAP 16. An example of such a configuration is the specific service and port combination of HTTP using port 80 for TCP. In such cases, user device 26 of user 10 is instructed to connect to address extraction module 28 using an alternative service (e.g. FTP) or port (e.g. 81). Since the request for the alternative service or port is not sent through a proxy, the real network address of the user is revealed.

In accordance with yet another embodiment of the present invention, the real network address of user 10 is obtained, when it is masked behind a proxy, by using an application. The application is installed on user device 26 either by the user or automatically, for example in the case of a Java applet. The application opens a direct connection to address extraction module 28, thereby bypassing the proxy. This method may be used when user device 26 is configured to proxy all services and ports. This application may be, for example, a Java applet, as applets may be easily downloaded and installed on user device 26.

In accordance with another embodiment of the present invention, the real network address of user 10 is obtained, when it is masked behind a proxy, by using automatic proxy configuration. User device 26 may be configured not to connect to the proxy when connecting to a specific network address. This may be done in two ways. It may be done automatically by sending the user an automatic configuration file such as a ".ins" file, i.e. an IEAK (Microsoft Internet Explorer Administration Kit) profile. Such a method of automatic configuration is described in http://www.windows.com/windows2000/en/server/help/wiz4_10.htm and is well known in the art. This method will configure the proxy settings, for example by using a ".pac" (Proxy Auto-Config) file.

In some cases, user device 26 is configured to download a configuration file from its NAP 16 at preset times. In such cases, the appropriate changes can be made to the files, and user device 26 will be automatically updated the next time the files are downloaded.

In both cases, the files will configure user device 26 not to use a proxy when connecting to the network address of NAP identification module 18 or to an alternate location where the address of user 10 is extracted.

In accordance with yet another embodiment of the present invention, the real network address of user 10 is obtained, when it is masked behind a proxy, by installing a network address extraction server "close" to the user. There are cases in which network address masking is a result of the network configuration of NAP 16, for example, NAT (Network Address Translation) and some cases of transparent proxies. If NAP identification module 18 or its address extraction module 28 is located "closer" to user 10, i.e. before the masking device and inside NAP 16, then the real network address of user 10 will be exposed to NAP identification module 18.

### Spoofing

In accordance with yet another embodiment of the present invention, malevolent users 10 are prevented from spoofing the addresses of other users 10, by requiring that a "secret", for example a large random number, be echoed. This process is used to prevent network address spoofing on a channel that is protected from eavesdropping. Following the initial connection, address extraction module 28 replies to the user connection with a randomly generated secret, which user device 26 echoes back to address extraction module 28. The two secrets must match in order for the process to succeed. If a malevolent user 10 provides an incorrect network address, the secret will be sent back to the true owner of the network address, and the attacker will not have access to the secret.

Using this method, the problem of network address spoofing is reduced to a problem of preventing eavesdropping on the channel between user device 26 and address extraction component 28 of NAP identification module 18. To achieve this, in accordance with an embodiment of the present invention, the address extraction module 28 is placed as close as possible to the incoming connection of user device 26. For example, the address extraction module 28 can be integrated into or placed in proximity to access system 24 of NAP 16. This architecture eliminates the insecure network segment from the process, thus making the channel relatively immune to eavesdropping.

### Services

In step 134 (Fig. 5), the identification system reports all user information to service provider 12 or switch 14. In many cases this may pose privacy problems. In an embodiment of the present invention, NAP identification module 18 does not report user information but instead verifies information items provided to it in the identification request. NAP identification module 18 identifies user 10, compares the user information it receives with the user information it has, and returns a match score describing the similarity between the two sets of user information. For example, this may be used to verify billing details provided manually by user 10 at an e-commerce site.

In accordance with another embodiment of the present invention, NAP identification module 18 does not report user information, but rather sends a virtual ID for user 10. This ID is identical in different sessions of the same user 10 and thus allows service providers 12 to maintain user accounts without requiring a password. For example, a web-based email service may automatically allow access to users 10 based on the virtual ID.

In accordance with another embodiment of the present invention, NAP identification module 18 does not report user information but, rather, associates information provided in the request with information saved in a previous session. This previously saved information is sent in the response. For example, service provider 12 asks the automatic identification system to associate some information item (e.g. the right of known user 10 to access a web site) with an unknown user 10. The identification system will identify unknown user 10 as known user 10 and associate this information with his identifier. Upon request of service provider 12 (e.g. to verify whether a user 10 has access to a web site), the identification system will send the saved information. This service is similar to an HTTP cookie, except that the information is kept in the identification system, not on the user's computer. This allows for higher flexibility and security.

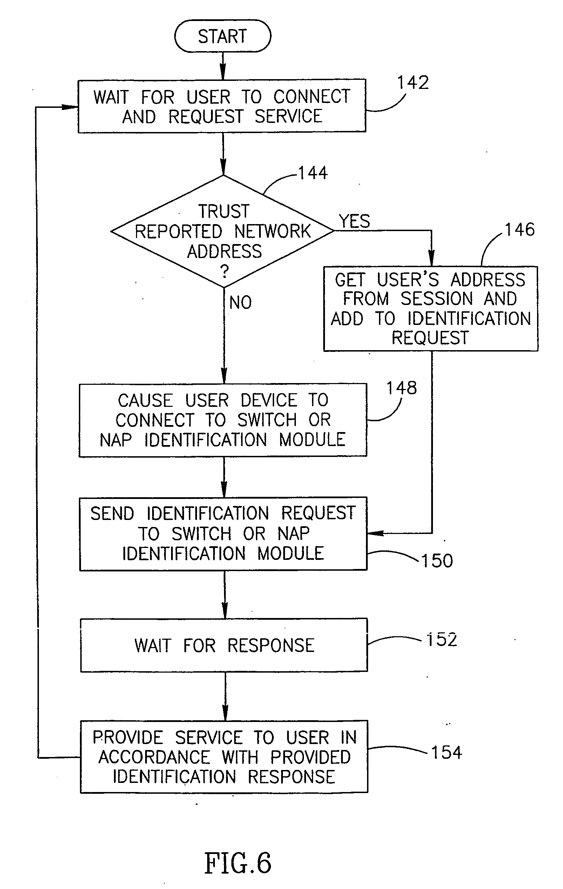

Reference is now made to Fig. 6, which is a schematic flowchart illustrating the steps of the automatic identification method performed by service provider 12. Service provider 12 waits for user 10 to request a service that requires identification (step 142). Upon connection of a user 10, the system decides whether it will trust the network address reported by the user communication session (decision step 144). If yes, it includes this address in the identification request (step 146) and transfers control to step 150. If not, the system causes user device 26 to connect to identification switch 14 or NAP identification module 18 (step 148). This may be achieved by embedding an image, HTML frame, or other object in an HTML page provided to user 10, with a source address at switch 14 or NAP 16. For example, such an element may look like <img src = http://switch.identify.com/?session=12345>. Additionally, a session ID may be necessary to allow switch 14 or NAP 16 to associate the correct user session with the identification request sent directly from service provider 12. Next, the request is sent to switch 14 or NAP identification module 18 (step 150), the system waits for a response (step 152), and the service is provided in accordance with the response (step 154).

Reference is now made to Fig. 7, a schematic flowchart illustrating the steps of the automatic identification method performed by optional identification switch 14. Switch 14 waits for an identification request from service provider 12 (step 162). Switch 14 determines which NAP 16 is currently servicing user 10 using one of the methods described hereinbelow (step 164). If the NAP 16 does not have an identification module 18 installed (as checked in step 166), switch 14 reports a failure to service provider 12 (step 168) and resumes waiting for the next request (step 162). If NAP 16 does have an identification module 18 installed, the request is forwarded to it (step 170). Next, switch 14 checks whether the request includes the network address of user 10 (step 172). If not, switch 14 waits for user device 26 to connect (step 174), and causes it to connect to NAP identification module 18 (step 176). Control is then transferred to step 178. If the request does include the network address of user 10, switch 14 waits for NAP identification module 18 to respond (step 178), forwards this response to service provider 12 (step 180), and then resumes waiting for the next request (step 162).

It should be noted that while Fig. 1 and Fig. 7 assume requests are sent to NAP identification modules 18 through identification switch 14, the identification system may also operate using direct communications between service providers 12 and NAP identification modules 18. For example, service provider 12 may query switch 14 to receive communication details of the NAP 16 of user 10 and then contact NAP identification module 18 directly.

As mentioned hereinabove, if there is only one NAP 16, no NAP 16 identification is necessary. The request may be sent directly to NAP identification module 18 without use of an identification switch 14.

In step 164, identification switch 14 determines to which NAP identification module 18 to forward the request. In accordance with an embodiment of the present invention, this step is done by maintaining a table of network address ranges assigned to each NAP 16. The network address of user 10 is used to determine which NAP 16 assigned it and is, by implication, currently servicing user 10. This table may be updated manually when network address assignments change, or updated automatically from NAP identification module 18 based on information reported from access system 24 (Fig. 2). Alternatively, the table may be constructed from existing network address assignment databases, such as those used for routing purposes or reverse DNS (domain name service), and is described in detail in RFCs 1034 and 1035.

In another embodiment of the present invention, the step of forwarding the request to the correct NAP identification module 18 is done using special network configurations at participating NAPs 16. For example, network appliances such as an HTTP proxy or a WAP Gateway in NAP 16 may be configured to route special requests (e.g. HTTP or WAP/WTP requests to a special IP address or URL) to a local server. In this case, user device 26 is directed to connect to the special address (e.g. by embedding a special image in an HTML page) and the local NAP identification module 18 intercepts the connection and identifies user 10.

Since this identification method does not require a central database, it is possible to build the complete identification system without identification switch 14. In this case, service provider 12 sends the user device 26 directly to the special URL, and NAP identification module 18 responds directly to service provider 12.

In accordance with another embodiment of the present invention, several NAPs 16 may be sharing network address ranges. This may occur if, for example, they share network infrastructure for economic reasons. If a central database is used to associate network address ranges with NAP identification module 18, several NAPs 16 may be queried in parallel, and only the one currently servicing the registered network address will respond.

It should be noted that even though the network address exposed to switch 14 might be masked by a proxy, this would not prevent identification switch 14 from working, since proxies are usually operated by NAP 16, and thus have a network address within the range of NAP 16.

It is noted that an embodiment of this system and method may be applied to an anonymous network herein defined as a network on which the identity of the user 10 is not transparent to service provider 12.

It will be appreciated by persons skilled in the art that the present invention is not limited by what has been particularly shown and described hereinabove. Rather the scope of the invention is defined by the claims that follow:

## Claims

1. A method for automatically acquiring the identity of a user (10) requesting service from a service provider (12), said method comprising:
accessing a network by said user (10) through a network access provider (16), NAP, that includes an access system (24) to control access of the user (10) to the network;
engaging in a communication session with a service provider (12) that is connected to the network, to request the service provider (12) to provide a service to the user (10),
initiating a request by said service provider (12) to said NAP (16) to identify said user (10) from the user's network address;
wherein said method is **characterized by**:
identifying the NAP (16) to which to send the request by routing the request via an identification switch (14) that determines which NAP (16) from a plurality of NAPs is servicing the user (10),
said NAP (16) comprising an identification module (18) to resolve the requests by said service provider (12);
wherein responsive to the request, retrieving user identification information associated with the user's network address; and
sending a response with the user identification information to said service provider (12).

2. The method according to claim 1, wherein said retrieving is performed by the identification module (18) of the NAP (16) servicing said user (10).

3. The method according to claim 1, wherein said request comprises at least one session identifier of said communication session.

4. The method according to claim 3, wherein said at least one session identifier comprises at least one network address used by said user (10).

5. The method according to claim 1, wherein said retrieving comprises a second retrieving of at least one network address used by said user (10).

6. The method according to claim 5, wherein said second retrieving comprises at least one of:
instructing a device being used by said user (10) to connect to an address extraction module (28) of said NAP (16) via an alternative service or port not associated with a proxy server;
configuring said device not to connect to said proxy server when connecting to a specific network address;
opening a direct connection between an application sent to said device and said address extraction module (28);
using a proxy plug in;
installing a network sniffer between said device and said proxy server;
installing a network extraction module between said device and said proxy server;
accepting as correct a user network address reported by said proxy server;
and
configuring said device to echo back a secret sent to said device and verifying that the sent secret and the received secret are identical.

7. The method according to claim 1, wherein said retrieving comprises:
retrieving data from a group of databases including an online session database (32) that keeps track of all users currently connected to NAP (16) and a user information database (22) that includes user identification information, said online session database (32) and said user information database (22) being in communication with said NAP (16).

8. The method according to claim 1, wherein said sending comprises:
reporting information associated with said user (10) associated with said communication session.

9. The method according to claim 8, wherein said sending comprises:
sending to said service provider (12) information associated with said user (10) in a previous request.

10. The method according to claim 1, wherein sending comprises:
verifying any information items provided in said identification request by said service provider (12);
and
sending a match report noting the similarity between said information associated with said communication session and said information items provided in said identification request;
or
sending a virtual identification (ID) for said user (10) to said service provider (12).

11. The method according to claim 1, further comprising:
determining the identity of the NAP (16) currently handling said communication session; and
forwarding said identification request to the identification module (18) of said NAP (16) currently handling said communication session.

12. The method according to claim 11, wherein said sending of the response is performed only by the NAP (16) currently handling said communication session.

13. The method according to claim 11, wherein said determining comprise:
maintaining a look up table of network addresses associated with a plurality of NAPs (16); and
determining the identity of said NAP (16) by reference to said look-up table.

14. The method according to claim 13, wherein said maintaining comprises:
manually updating said look-up table whenever network address assignments change;
or
updating said look-up table from said identification module of said NAP (16) currently handling said communication session based on information reported from the access system (24);
or
constructing said look-up table from existing network address assignment databases.

15. The method according to claim 11, wherein said determining comprises:
preconfiguring said NAP (16) servicing said user (10) to intercept a user request for a specific resource; and
causing the device (26) being used by said user (10) to send such user requests for said specific resource to be amended by the NAP (16) to include a notification for the service provider (12) indicating which NAP (16) is currently handling said communication session for the user (10), so that the service provider (12) can send requests directly to the correct NAP (16).

16. The method according to claim 1, wherein said network is selected from the group consisting of:
an Internet network;
a wireless data network;
a cellular data network; and
a CATV-based data network.

17. The method according to claim 1, wherein said user is connected to said NAP (16) over a link selected from the group consisting of:
a phone link;
a cellular phone link;
a wireless link;
a data over CATV link;
a satellite link;
an xDSL link; and
a link over another data network

18. A method according to claim 1, wherein information associated with said communication session is selected from the group consisting of:
an account identifier of said user (10) associated with said communication session at said NAP (16);
information associated with said account identifier;
an identifier of a link between said user (10) and said NAP(16); and
information associated with said link identifier.

19. A system for providing automatically acquiring identification of a user for a service provider (12) over a network, comprising:
a network access provider, NAP, (16), that comprises an access system (24) to allow or prevent a user (10) from accessing the network;
a user device (26) to connect to the service provider (12) through said network via said NAP (16);
wherein said system is **characterized by** an identification switch (14) that determines which NAP (16) from a plurality of NAPs is servicing the user (10),
said NAP (16) comprising an identification module (18);
wherein said identification module (18) is adapted to receive requests from said service provider (12) to identify a user (10) from the user's network address; and
wherein responsive to the requests, said identification module (18) is adapted to retrieve user identification information associated with the user's network address, and send a response with the user identification information to said service provider (12) to identify the user (10).

## Patentansprüche

1. Ein Verfahren für den automatischen Erwerb der Identität eines Benutzers (10), der einen Service von einem Serviceanbieter (12) anfordert, wobei das besagte Verfahren folgendes umfasst:
Zugriff zu einem Netzwerk durch den besagten Benutzer (10) über einen Netzwerkanbieter (16) (NAP), das ein Zugriffsystem (24) für die Kontrolle des Zugriffs des Benutzers (10) auf das Netzwerk einschließt;
Eintritt in eine Kommunikationssitzung mit einem Serviceanbieter (12), der an das Netzwerk angeschlossen ist, um beim Serviceanbieter (12) einen Service für den Benutzer (10) zu beantragen,
Einleiten einer Anfrage durch den besagten Serviceanbieter (12) an den besagten NAP (16), um den besagten Benutzer (10) ausgehend von der Netzwerkadresse des Benutzers zu identifizieren;
wobei das besagte Verfahren **dadurch gekennzeichnet ist, dass**:
der NAP (16) identifiziert wird, an den die Anfrage geschickt werden soll, indem die Anfrage über eine Identifikationsschaltung (14) geroutet wird, die bestimmt, welcher NAP (16) aus einer Mehrzahl von NAPs den Benutzer (10) bedient,
wobei der besagte NAP (16) ein Identifikationsmodul (18) für die Lösung der Anfragen durch den besagten Serviceanbieter (12) umfasst;
wobei in Antwort auf die Anfrage Identifikationsdaten des Benutzers in Verbindung mit der Netzwerkadresse des Benutzers abgefragt werden;
eine Antwort mit den Identifikationsdaten des Benutzers an den besagten Serviceanbieter (12) geschickt wird.

2. Das Verfahren nach Anspruch 1, wobei die besagte Abfrage durch das Identifikationsmodul (18) des NAP (16) durchgeführt wird, der den besagten Benutzer (10) bedient.

3. Das Verfahren nach Anspruch 1, wobei die besagte Anfrage mindestens einen Sitzungsidentifikator der besagten Kommunikationssitzung umfasst.

4. Das Verfahren nach Anspruch 3, wobei der zumindest eine Sitzungsidentifikator zumindest eine vom besagten Benutzer (10) benutzte Netzwerkadresse umfasst.

5. Das Verfahren nach Anspruch 1, wobei die besagte Abfrage eine zweite Abfrage von zumindest einer vom besagten Benutzer (10) benutzten Netzwerkadresse umfasst.

6. Das Verfahren nach Anspruch 5, wobei die besagte zweite Abfrage zumindest einen der nachstehenden Vorgänge umfasst:
Anweisung an eine vom besagten Benutzer (10) benutzte Vorrichtung zum Anschluss an ein Adressextraktionsmodul (28) des besagten NAP (16) über einen alternativen Service oder Port, der nicht mit einem Proxy-Server in Verbindung steht;
Konfiguration der besagten Vorrichtung, sich nicht am besagten Proxy-Server anzuschließen, wenn sie sich an eine spezifische Netzwerkadresse anschließt;
Öffnung eines Direktanschlusses zwischen einer an die besagte Vorrichtung geschickten Anwendung und dem besagten Adressextraktionsmodul (28);
Benutzung eines Proxy Plug-in;
Installation eines Netzwerkschnüfflers zwischen der besagten Vorrichtung und dem besagten Proxy-Server;
Installation eines Netzwerkextraktionsmoduls zwischen der besagten Vorrichtung und dem besagten Proxy-Server;
Annahme einer vom besagten Proxy-Server berichteten Netzwerkadresse des Benutzers als richtig;
Konfiguration der besagten Vorrichtung, ein Echo eines an die besagte Vorrichtung geschickten Geheimnisses zurückzugeben und Prüfung, dass das geschickte Geheimnis und das erhaltene Geheimnis identisch sind.

7. Das Verfahren nach Anspruch 1, wobei die besagte Abfrage folgende Vorgänge umfasst:
Abfrage von Daten aus einer Gruppe von Datenbanken einschließlich einer Datenbank (32) mit Ontine-Sitzungen, die alle aktuell an den NAP (16) angeschlossenen Benutzer verfolgt, und einer Datenbank mit Benutzerinformationen (22), die Informationen zur Benutzeridentifizierung enthält, wobei die besagte Datenbank (32) mit Online-Sitzungen und die besagte Datenbank mit Benutzerinformationen (22) in Kommunikation mit dem besagten NAP (16) stehen.

8. Das Verfahren nach Anspruch 1, wobei das besagte Schicken folgendes umfasst:
Berichten von Informationen im Zusammenhang mit dem besagten Benutzer (10) zusammen mit der besagten Kommunikationssitzung.

9. Das Verfahren nach Anspruch 8, wobei das besagte Schicken folgendes umfasst:
Schicken von Informationen aus einer vorherigen Anfrage im Zusammenhang mit dem besagten Benutzer (10) an den besagten Serviceanbieter (12).

10. Das Verfahren nach Anspruch 1, wobei das Schicken folgendes umfasst:
Überprüfung von in der besagten Identifikationsanfrage bereitgestellten Informationspunkten durch den besagten Serviceanbieter (12); und
Schicken eines Match-Berichts mit Anmerkung der Ähnlichkeit zwischen der besagten Information im Zusammenhang mit der besagten Kommunikationssitzung und den besagten Informationspunkten, die in der besagten Identifikationsanfrage bereitgestellt wurden;
oder
Schicken einer virtuellen Identifikation (ID) für den besagten Benutzer (10) an den besagten Serviceanbieter (12).

11. Das Verfahren nach Anspruch 1, das ferner umfasst:
Bestimmung der Identität des NAP (16), der aktuell die besagte Kommunikationssitzung bearbeitet; und
Weiterleitung der besagten Identifikationsanfrage an das Identifikationsmodul (18) des besagten NAP (16), der aktuell die besagte Kommunikationssitzung bearbeitet.

12. Das Verfahren nach Anspruch 11, wobei das besagte Schicken der Antwort nur von dem NAP (16) durchgeführt wird, der aktuell die besagte Kommunikationssitzung bearbeitet.

13. Das Verfahren nach Anspruch 11, wobei die besagte Bestimmung folgendes umfasst:
Pflege einer Nachschlagtabelle von Netzwerkadressen im Zusammenhang mit einer Mehrzahl von NAPs (16); und
Bestimmung der Identität des besagten NAP (16) durch Bezugnahme auf die besagte Nachschlagtabelle.

14. Das Verfahren nach Anspruch 13, wobei die besagte Pflege folgendes umfasst:
Manuelle Aktualisierung der besagten Nachschlagtabelle, wenn Zuordnungen von Netzwerkadressen wechseln;
oder
Aktualisierung der besagten Nachschlagtabelle ausgehend vom besagten Identifikationsmodul des besagten NAP (16), der aktuell die besagte Kommunikationssitzung auf der Grundlage von Informationen bearbeitet, die vom Zugriffsystem (24) berichtet werden;
oder
Aufbau der besagten Nachschlagtabelle ausgehend von vorhandenen Datenbanken mit Zuordnungen von Netzwerkadressen.

15. Das Verfahren nach Anspruch 11, wobei die besagte Bestimmung folgendes umfasst:
Vorkonfiguration des den besagten Benutzer (10) bedienenden besagten NAP (16), damit er eine Benutzeranfrage nach einer spezifischen Ressource abfängt; und
die vom besagten Benutzer (10) benutzte Vorrichtung (26) dazu zu veranlassen, solche Benutzeranfragen nach besagten spezifischen Ressourcen, die vom NAP (16) ergänzt werden müssen, zu senden und eine Mitteilung an den Serviceanbieter (12) einzuschließen mit der Angabe des NAP (16), der aktuell die besagte Kommunikationssitzung für den Benutzer (10) bearbeitet, so dass der Serviceanbieter (12) Anfragen direkt an den richtigen NAP (16) schicken kann.

16. Das Verfahren nach Anspruch 1, wobei das besagte Netzwerk in einer Gruppe mit den folgenden gewählt wird:
ein Internet Netzwerk;
ein drahtloses Datennetzwerk;
ein Zellendatennetzwerk; und
ein auf CATV basierendes Datennetzwerk.

17. Das Verfahren nach Anspruch 1, wobei der besagte Benutzer über einen Link mit dem besagten NAP (16) verbunden wird, der aus einer Gruppe mit den folgenden gewählt wird:
ein Telefon-Link;
ein Handy-Link;
ein drahtloser Link;
ein Link mit Daten über CATV;
ein Satelliten-Link;
ein xDSL Link; und
ein Link über ein anderes Netzwerk

18. Ein Verfahren nach Anspruch 1, wobei Informationen im Zusammenhang mit der besagten Kommunikationssitzung aus einer Gruppe mit den folgenden gewählt werden:
Ein Kontoidentifikator des besagten Benutzers (10) in Verbindung mit der besagten Kommunikationssitzung beim besagten NAP (16);
Informationen im Zusammenhang mit dem besagten Kontoidentifikator;
Ein Identifikator eines Links zwischen dem besagten Benutzer (10) und dem besagten NAP (16); und
Informationen im Zusammenhang mit dem besagten Linkidentifikator.

19. Ein System, das automatischen Erwerb der Identität eines Benutzers für einen Serviceanbieter (12) über ein Netzwerk bereitstellt und folgendes umfasst:
Ein vom NAP (16) bereitgestellter Netzwerkzugriff, der ein Zugriffsystem (24) umfasst, damit ein Benutzer (10) Zugriff zum Netzwerk erhält oder daran gehindert wird;
Eine Benutzervorrichtung (26) für den Anschluss an den Serviceanbieter (12) durch das besagte Netzwerk über den besagten NAP (16);
wobei das besagte System durch einen Identifikationsschalter (14) gekennzeichnet ist, der bestimmt, welcher NAP (16) aus einer Mehrzahl von NAPs den Benutzer (10) bedient,
wobei der besagte NAP (16) ein Identifikationsmodul (18) umfasst;
wobei das besagte Identifikationsmodul (18) geeignet ist, Anfragen vom besagten Serviceanbieter (12) zu erhalten, einen Benutzer (10) ausgehend von der Netzwerkadresse des Benutzers zu identifizieren; und
wobei in Antwort auf die Anfrage das besagte Identifikationsmodul (18) geeignet ist, Identifikationsdaten des Benutzers in Verbindung mit der Netzwerkadresse des Benutzers abzufragen und eine Antwort mit den Identifikationsdaten des Benutzers an den besagten Serviceanbieter (12) zu schicken, um den Benutzer (10) zu identifizieren.

## Revendications

1. Méthode pour l'acquisition automatique de l'identité d'un utilisateur (10) requérant un service de la part d'un fournisseur de service (12), ladite méthode comprenant :
l'accès à un réseau par ledit utilisateur (10) via un fournisseur d'accès à un réseau (16) FAR qui inclut un système d'accès (24) pour contrôler l'accès de l'utilisateur (10) au réseau ;
l'engagement dans une session de communication avec un fournisseur de service (12) qui est connecté au réseau, pour demander au fournisseur de service (12) de fournir un service à l'utilisateur (10),
l'initiation d'une demande par ledit fournisseur de service (12) audit FAR (16) pour identifier ledit utilisateur (10) depuis l'adresse réseau de l'utilisateur ;
ladite méthode étant **caractérisée par** :
l'identification du FAR (16) auquel envoyer la requête par le routage de la requête via un commutateur d'identification (14) qui détermine quel FAR (16) parmi une pluralité de FARs couvrant l'utilisateur (10),
ledit FAR (16) comprenant un module d'identification (18) pour résoudre les requêtes par ledit fournisseur de service (12) ;
sachant qu'il répond à la requête, récupère les informations d'identification de l'utilisateur associées à l'adresse réseau de l'utilisateur ; et
envoie une réponse avec les informations d'identification de l'utilisateur audit fournisseur de service (12).

2. Méthode selon la revendication 1, sachant que la récupération est effectuée par le module d'identification (18) du FAR (16) couvrant ledit utilisateur (10).

3. Méthode selon la revendication 1, sachant que ladite requête comprend au moins un identifiant de session de ladite session de communication.

4. Méthode selon la revendication 3, sachant qu'au moins un identifiant de session comprend au moins une adresse réseau utilisée par ledit utilisateur (10).

5. Méthode selon la revendication 1, sachant que ladite récupération comprend une seconde récupération d'au moins une adresse réseau utilisée par ledit utilisateur (10).

6. Méthode selon la revendication 5, sachant que ladite seconde récupération comprend au moins l'un des éléments suivants :
instruction d'un appareil utilisé par ledit utilisateur (10) pour la connexion à un module d'extraction d'adresse (28) dudit FAR (16) via un service alternatif ou port non associé à un serveur proxy ;
configuration dudit appareil pour ne pas connecter ledit serveur proxy lors de la connexion à une adresse réseau spécifique ;
ouverture d'une connexion directe entre une application envoyée audit appareil et audit module d'extraction d'adresse (28) ;
utilisation d'un plug-in proxy ;
installation d'un détecteur de réseau entre ledit appareil et ledit serveur proxy,
installation d'un module d'extraction de réseau entre ledit appareil et ledit serveur proxy,
acceptation en tant que correcte d'une adresse réseau d'utilisateur rapportée par ledit serveur proxy ; et
configuration dudit appareil pour répercuter un secret envoyé audit appareil et vérification du fait que le secret envoyé et le secret reçu sont identiques.

7. Méthode selon la revendication 1, sachant que ladite récupération comprend :
la récupération de données depuis un groupe de bases de données incluant une base de données de session en ligne (32) qui conserve la trace de tous les utilisateurs actuellement connectés au FAR (16) et une base de données d'informations utilisateur (22) qui comprend des informations d'identification d'utilisateur, ladite base de données de session en ligne (32) et une base de données d'informations utilisateur (22) qui sont en communication avec ledit FAR (16).

8. Méthode selon la revendication 1, sachant que ledit envoi comprend :
le reportage d'informations associées audit utilisateur (10) associé à ladite session de communication.

9. Méthode selon la revendication 8, sachant que l'envoi comprend :
l'envoi audit fournisseur de service (12) d'informations associées audit utilisateur (10) dans une requête précédente.

10. Méthode selon la revendication 1, sachant que l'envoi comprend :
la vérification de tout élément d'information fourni dans ladite requête d'identification par ledit fournisseur de service provider (12) ;
et
l'envoi d'un rapport de correspondance indiquant la similarité entre lesdites informations associées à ladite session de communication et lesdits éléments d'information fournis dans ladite requête d'identification ;
ou
l'envoi d'une identification virtuelle (ID) pour ledit utilisateur (10) audit fournisseur de service (12).

11. Méthode selon la revendication 1, comprenant par ailleurs :
la détermination de l'identité du FAR (16) traitant actuellement ladite session de communication ; et
le transfert de ladite requête d'identification au module d'identification (18) dudit FAR (16) traitant actuellement ladite session de communication.

12. Méthode selon la revendication 11, sachant que ledit envoi de la réponse est effectué uniquement par le FAR (16) traitant actuellement ladite session de communication.

13. Méthode selon la revendication 11, sachant que ladite détermination comprend :
l'entretien d'un tableau de consultation d'adresses de réseau associées à une pluralité de FARs (16) ; et
la détermination de l'identité dudit FAR (16) par référence audit tableau de consultation.

14. Méthode selon la revendication 13, sachant que ledit entretien comprend :
la mise à jour manuelle dudit tableau de consultation lors de tout changement des affectations d'adresse de réseau ;
ou
la mise à jour dudit tableau de consultation depuis ledit module d'identification dudit FAR (16) traitant actuellement ladite session de communication sur la base d'informations rapportées par le système d'accès (24) ;
ou
la construction dudit tableau de consultation à partir de bases de données d'affectation d'adresse de réseau existantes.

15. Méthode selon la revendication 11, sachant que ladite détermination comprend :
la préconfiguration dudit FAR (16) couvrant ledit utilisateur (10) pour intercepter une requête d'utilisateur pour une ressource spécifique ; et
le fait d'entraîner que l'appareil (26) soit utilisé par ledit utilisateur (10) afin d'envoyer les requêtes d'utilisateur pour que ladite ressource spécifique soit modifiée par le FAR (16) en vue d'inclure une notification pour le fournisseur de service (12) indiquant quel FAR (16) traite actuellement ladite session de communication pour l'utilisateur (10), de sorte que le fournisseur de service (12) puisse envoyer des requêtes directement au FAR correct (16).

16. Méthode selon la revendication 1, sachant que ledit réseau est sélectionné parmi le groupe constitué :
d'un réseau Internet ;
d'un réseau de données sans fil ;
d'un réseau de données cellulaires ; et
d'un réseau de données CATV.

17. Méthode selon la revendication 1, sachant que ledit utilisateur est connecté audit FAR (16) via un lien sélectionné depuis le groupe constitué ;
d'un lien téléphonique
d'un lien téléphonique cellulaire ;
d'un lien sans fil ;
d'un lien de données CATV ;
d'un lien satellite ;
d'un lien xDSL ; et
d'un lien sur un autre réseau de données

18. Méthode selon la revendication 1, sachant que les informations associées à ladite session de communication sont sélectionnées depuis le groupe constitué :
d'un identifiant de compte dudit utilisateur (10) associé à ladite session de communication sur ledit FAR (16) ;
d'informations associées audit identifiant de compte ;
d'un identifiant d'un lien entre ledit utilisateur (10) et ledit FAR (16) ; et
d'informations associées audit identifiant de lien.

19. Système pour l'acquisition automatique de l'identification d'un utilisateur pour un fournisseur de service (12) sur un réseau, comprenant :
un FAR d'accès au réseau (16) qui comprend un système d'accès (24) permettant à ou empêchant un utilisateur (10) d'accéder au réseau ;
un appareil utilisateur (26) pour la connexion au fournisseur de service (12) à travers ledit réseau via ledit FAR (16) ;
sachant que ledit système est **caractérisé par** un commutateur d'identification (14) qui détermine quel FAR (16) à partir d'une pluralité de FARs couvre l'utilisateur (10),
ledit FAR (16) comprenant un module d'identification (18) ;
sachant que ledit module d'identification (18) est adapté en vue de recevoir des requêtes dudit fournisseur de service (12) afin d'identifier un utilisateur (10) depuis l'adresse réseau de l'utilisateur ; et
sachant qu'en réponse auxdites requêtes, ledit module d'identification (18) est adapté en vue de récupérer des informations d'identification de l'utilisateur associées à l'adresse réseau dudit utilisateur et en vue d'envoyer une réponse avec les informations d'identification de l'utilisateur audit fournisseur de service (12) afin d'identifier l'utilisateur (10).
